(19) Europäisches Patentamt
European Patent Office
Office européen des brevets

(11) **EP 4 699 848 A1**

(12) **EUROPEAN PATENT APPLICATION**
published in accordance with Art. 153(4) EPC

(43) Date of publication:
**25.02.2026 Bulletin 2026/09**

(21) Application number: 24902028.0

(22) Date of filing: **27.05.2024**

(51) International Patent Classification (IPC):
**B60L 7/28** (2006.01)  **B60T 8/17** (2006.01)

(52) Cooperative Patent Classification (CPC):
**B60L 7/28; B60T 8/17**

(86) International application number:
**PCT/CN2024/095489**

(87) International publication number:
**WO 2025/123599 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.12.2023 CN 202311737440**

(71) Applicant: **CRRC Changchun Railway Vehicles Co., Ltd.**
**Changchun, Jilin 130000 (CN)**

(72) Inventors:
• **ZHANG, Peng**
**Changchun, Jilin 130000 (CN)**
• **QIN, Qiang**
**Changchun, Jilin 130000 (CN)**
• **LI, Xiaoqing**
**Changchun, Jilin 130000 (CN)**
• **SHAO, Qing**
**Changchun, Jilin 130000 (CN)**

(74) Representative: **Lorenz Seidler Gossel Part. mbB**
**Widenmayerstr. 23**
**80538 München (DE)**

(54) **SELECTION METHOD AND DEVICE FOR EDDY CURRENT BRAKING LEVEL, CONTROLLER AND READABLE STORAGE MEDIUM**

(57)     A selection method for an eddy current braking level, comprising: on the basis of a stress parameter of a train in a braking process, acquiring an ideal braking distance corresponding to each eddy current braking level, wherein the stress parameter comprises a gravity component caused by a gradient of a road in an operation line of the train; on the basis of the ideal braking distance under each eddy current braking level, and a braking starting point, acquiring a target parking position of the train; comparing the ideal braking distance with a target braking distance to acquire an ideal braking level, wherein the target distance is the distance between the braking starting point and the target parking position; acquiring the correspondence between the distance and the speed of the train in an ideal braking process; on the basis of a difference of the operation positions in the ideal braking process and an actual braking process, acquiring a control amount; and on the basis of the control amount and the ideal braking level, acquiring an actual eddy current braking level used by the train. Further disclosed are a selection device for an eddy current braking level, a controller and a readable storage medium. By means of the actual eddy current braking level obtained by the method, the parking position of the train can be closer to a designated parking position.

FIG. 3

## Description

This application claims the priority to Chinese Patent Application No. 202311737440.0, titled "SELECTION METHOD AND DEVICE FOR EDDY CURRENT BRAKING LEVEL, CONTROLLER AND READABLE STORAGE MEDIUM", filed on December 15, 2023 with the China National Intellectual Property Administration, which is incorporated herein by reference in its entirety.

## FIELD

The present disclosure relates to the field of control technologies, and in particular to a method and an apparatus for determining an eddy current braking level, a controller, and a readable storage medium.

## BACKGROUND

A maglev train is a type of rail transportation vehicle without wheels (that is, gear transmission mechanisms). Since a certain gap always exists between the maglev train and a track during operation, the maglev train can travel at a high speed.

In emergency situations, the maglev train employs eddy current braking for emergency braking. Eddy current braking levels for a high-speed maglev train include multiple levels, such as 7 levels. Different levels correspond to different eddy current braking excitation currents, thereby generating eddy current braking forces with varying magnitudes. The eddy current braking force is a main factor for reducing a speed of the high-speed maglev train.

Based on structural characteristics of the high-speed maglev train and its route, the train should stop at several specified positions during emergency braking. Thus, when the maglev train travels at a high speed, an appropriate eddy current braking level is applied by means of an eddy current braking system of the maglev train, enabling the train to stop at the specified positions in the route safely and reliably. It is evident that determination of the eddy current braking level is particularly important.

## SUMMARY

According to the present disclosure, a method and an apparatus for determining an eddy current braking level, a controller, and a readable storage medium are provided, to address an issue of determining an eddy current braking level such that a maglev train stops at a specified position during emergency braking.

To achieve the above objective, the following technical solutions are provided according to the present disclosure.

According to a first aspect of the present disclosure, a method for determining an eddy current braking level is provided. The method includes:

acquiring ideal braking distances corresponding to eddy current braking levels based on a force parameter of a train during a braking process, where the force parameter includes: a gravitational component force caused by a gradient of a track in an operating route of the train;

acquiring a target stop position of the train based on the ideal braking distances under the eddy current braking levels and a braking start point;

acquiring ideal braking levels by comparing the ideal braking distances with a target braking distance, where the target braking distance is a distance between the braking start point and the target stop position;

acquiring a correspondence between a distance and a speed of the train during an ideal braking process, where the ideal braking process is a process of braking using the ideal braking levels;

acquiring a control quantity based on a difference between operating positions in the ideal braking process and an actual braking process; and

acquiring an actual eddy current braking level for the train based on the control quantity and the ideal braking levels.

In an embodiment, the acquiring a target stop position of the train based on the ideal braking distances under the eddy current braking levels and a braking start point includes:

determining, in response to a distance between the braking start point and a first preset stop position arranged first ahead of the train being less than a distance threshold, a second preset stop position arranged second ahead of the train as the target stop position, where the distance threshold is an ideal braking distance corresponding to an eddy current braking level with a maximum braking force; and

determining, in response to the distance between the braking start point and the first preset stop position being greater than the distance threshold, the first preset stop position as the target stop position.

In an embodiment, the acquiring ideal braking levels by comparing the ideal braking distances with a target braking distance includes:
traversing the eddy current braking levels in a preset order, and determining a first eddy current braking level k encountered first in the traversing that meets a condition and a previous eddy current braking level k-1 of the first eddy current braking level k meeting the condition as the ideal braking levels, where the preset order is an ascending order of eddy current braking forces, and the condition includes an ideal braking distance corresponding to the first eddy current braking level k being less than the target braking distance.

In an embodiment, the acquiring a correspondence between a distance and a speed of the train during an ideal braking process includes:

acquiring a timing for switching from the ideal braking level k to the ideal braking level k-1; and

acquiring the correspondence between the distance and the speed during the ideal braking process based on the timing for switching, an initial speed at which braking starts, a time period elapsed during the ideal braking process, and ideal braking forces under the ideal braking levels.

In an embodiment, the acquiring a timing for switching from the ideal braking level k to the ideal braking level k-1 includes:

acquiring distances between positions during a braking process under the ideal braking level k and the target stop position;

searching among the distances for a distance which is equal to a reference braking distance, to obtain a target distance, where the reference braking distance is a braking distance obtained assuming that the train, under the ideal braking level k-1, uses a speed at the target distance as an initial speed; and

determining a time instant when the train travels to the target distance as the timing for switching.

In an embodiment, the acquiring an actual eddy current braking level for the train based on the control quantity and the ideal braking levels includes:
determining a sum of the ideal braking level k and the control quantity as the actual eddy current braking level before the timing for switching, and determining a sum of the ideal braking level k-1 and the control quantity as the actual eddy current braking level after the timing for switching.

In an embodiment, the gravitational component force caused by the gradient of the track in the operating route of the train is acquired based on a mass of the train and the gradient, and the gradient is an angle between a slope in the operating route and a horizontal plane.

According to a second aspect of the present disclosure, an apparatus for determining an eddy current braking level is provided. The apparatus includes: a first acquisition module, a second acquisition module, a third acquisition module, a fourth acquisition module, and a control module.

The first acquisition module is configured to acquire ideal braking distances corresponding to eddy current braking levels based on a force parameter of a train during a braking process, where the force parameter includes: a gravitational component force caused by a gradient of a track in an operating route of the train.

The second acquisition module is configured to acquire a target stop position of the train based on the ideal braking distances under the eddy current braking levels and a braking start point.

The third acquisition module is configured to acquire ideal braking levels by comparing the ideal braking distances with a target braking distance, where the target braking distance is a distance between the braking start point and the target stop position.

The fourth acquisition module is configured to acquire a correspondence between a distance and a speed of the train during an ideal braking process, where the ideal braking process is a process of braking using the ideal braking levels.

The control module is configured to acquire a control quantity based on a difference between operating positions in the ideal braking process and an actual braking process, and acquire an actual eddy current braking level for the train based on the control quantity and the ideal braking levels.

According to a third aspect of the present disclosure, a controller is provided. The controller includes: a memory and a processor.

The memory is configured to store a computer program.

The processor is configured to perform the method for determining the eddy current braking level according to the first aspect of the present disclosure by executing the computer program.

According to a fourth aspect of the present disclosure, a readable storage medium is provided. Instructions in the readable storage medium, when executed by a processor of an electronic device, cause the electronic device to perform the method for determining the eddy current braking level according to the first aspect of the present disclosure.

In the method and apparatus for determining the eddy current braking level according to the present disclosure, ideal braking distances corresponding to eddy current braking levels are acquired based on a force parameter of a train during a braking process; a target stop position of the train is acquired based on the ideal braking distances under the eddy current braking levels and a braking start point; ideal braking levels are acquired by comparing the ideal braking distances with a target braking distance, where the target braking distance is a distance between the braking start point and the target stop position; a correspondence between a distance and a speed of the train during an ideal braking process is acquired; a control quantity is acquired based on a difference between operating positions in the ideal braking process and an actual braking process; and an actual eddy current braking level for the train is acquired based on the control quantity and the ideal braking levels. Since the force parameter includes: a gravitational component force caused by a gradient of a track in an operating route of the train, the acquired ideal braking distances corresponding to the eddy current braking levels are closed to an actual distance, and thus the acquired ideal braking levels are accurate. Furthermore, since the control quantity is acquired based on a difference between an ideal braking distance and an actual braking distance under the ideal braking level, the acquired control quantity is accurate, and thus the acquired actual eddy current braking level enables the train to stop at a position closed to the specified stop position.

## BRIEF DESCRIPTION OF THE DRAWINGS

To clearly illustrate technical solutions in the embodiments of the present disclosure or in related art, the drawings used in the description of the embodiments or the related art are briefly described below. Apparently, the drawings in the following description are only some of the embodiments of the present disclosure, and other drawings may be obtained by those skilled in the art based on these drawings without any creative effort.

FIG. 1 is a flowchart of a method for acquiring an eddy current braking level according to an embodiment of the present disclosure;

FIG. 2 is a schematic diagram of fuzzy control for acquiring a control quantity;

FIG. 3 is a flowchart of a method for acquiring an eddy current braking level according to another embodiment of the present disclosure; and

FIG. 4 is a schematic structural diagram of an apparatus for acquiring an eddy current braking level according to an embodiment of the present disclosure.

## DETAILED DESCRIPTION

Technical solutions of embodiments of the present disclosure are clearly and completely described hereinafter in conjunction with the drawings of the embodiments of the present disclosure. The terms used in the following embodiments are only for the purpose of describing particular embodiments and are not intended to limit the present disclosure. As used in the specification and appended claims of the present disclosure, the singular expressions "a", "an", "the", "such", "this" and "this one" are intended to also include expressions such as "one or more" unless the context clearly indicates the contrary. It should also be understood that in the embodiments of the present disclosure, the term "one or more" refers to one, two or more; and the term "and/or" describes an association relationship of related objects and indicates there may be three kinds of relationships, for example, A and/or B may indicate three cases, such as A exists alone, A and B exist at the same time, and B exists alone. In each case, a quantity of A may be one or more, and a quantity of B may be one or more. The symbol "/" generally indicates that a former object and a latter object are associated by an "or" relationship.

References to "one embodiment" or "embodiments" and the like described in this specification indicate that a particular feature, structure, or characteristic described in connection with the embodiment is included in one or more embodiments of the present disclosure. Thus, the phrases "in one embodiment", "in some embodiments", "in other embodiments" and "in another embodiments" appearing in different places in this specification do not necessarily all refer to the same embodiment, but mean "one or more but not all embodiments" unless otherwise emphasized. The terms "including", "comprising", "having" and their variations all mean "including but not limited to" unless otherwise specifically emphasized.

"Multiple" in the embodiments of the present disclosure refers to two or more. It should be noted that in the description of the embodiments of the present disclosure, words such as "first" and "second" are only used for the purpose of distinguishing descriptions, and cannot be understood as indicating or implying relative importance, nor can they be understood as indicating or implying order.

An eddy current braking process employs hierarchical control. That is, multiple eddy current braking levels are configured, and different levels correspond to different eddy current braking excitation currents, thereby generating eddy current braking forces with varying magnitudes. In an example, the eddy current braking levels includes seven levels, and the highest level is level 7. A higher level indicates a greater eddy current braking force.

In the research, it is found that in a case of emergency braking of a maglev train, a problem is typically exists that a distance between an actual stop position and a specified stop position is large. In addition, it is found that the cause of this problem lies in an assumption that an ideal braking distance is calculated under a condition of a straight and level track, with a gravitational component force caused by a gradient of a track in a route treated as a random disturbance. Taking an ideal braking curve for the straight and level track as a control target, the influence of the gravitational component force caused by the gradient of the track on a final stop position is compensated through a fuzzy control algorithm. Since the eddy current braking process employs hierarchical control and the highest level is level 7, the presence of a long slope, a steep slope, or proximity to the specified stop position during braking may lead to a large distance between an actual stop position of the train and the specified stop position, thereby degrading the stability of an eddy current braking system.

To determine a suitable eddy current braking level such that the maglev train accurately stops at the specified position, a method for determining an eddy current braking level is provided according to an embodiment of the present disclosure, which is applied to a control system of the maglev train.

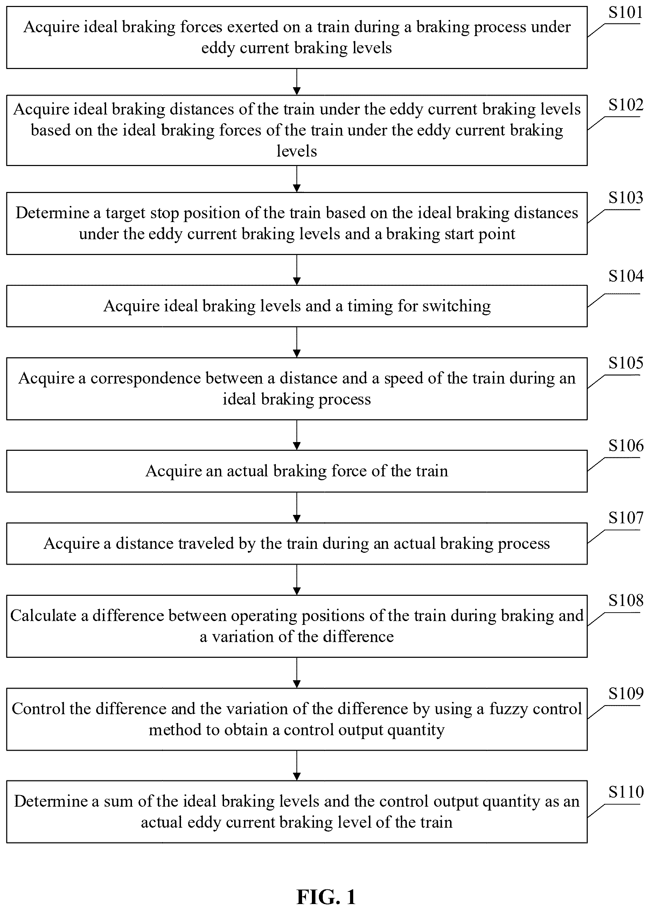

FIG. 1 is a flowchart of a method for acquiring an eddy current braking level according to an embodiment of the present disclosure. The method includes steps S101 to S110.

In step S101, ideal braking forces exerted on a train during a braking process under eddy current braking levels are acquired.

A braking force exerted on the train during the braking process includes: air resistance, a skid friction force, a wear plate friction force, guide electromagnet resistance, and the gravitational component force along a track slope.

An ideal braking force may be understood as a braking force exerted on the maglev train without considering a random disturbance force exerted on it during the braking process.

The ideal braking force of the train is calculated according to equation (1):

$$F_i = F_A + F_E + F_W + F_F + F_C + F_S \quad (1)$$

where $F_i$ represents an ideal braking force of the train under an eddy current braking level $i$, $i$ = 1, 2, ..., N, and N is an integer greater than 2, for example, 7.

$F_A$ represents the air resistance, $F_E$ represents an eddy current braking force, $F_W$ represents the skid friction force, $F_F$ represents the wear plate friction force, $F_C$ represents the guide electromagnet resistance, and $F_S$ represents the gravitational component force along the track slope in a current operating route, that is, the gravitational component force caused by the gradient of the track in the current operating route.

Based on equation (1), it can be seen that the gravitational component force $F_S$ along the track slope is determined as one of the bases to calculate the ideal braking force of the train, meaning that the influence of the gravitational component force caused by the gradient of the track on the braking process of the train is considered.

Compared with the conventional technology where the gravitational component force along the track slope is determined as a random disturbance factor, the gravitational component force along the track slope is determined as an influencing factor of an ideal braking force (curve) in this step. Thus, under the same conditions, the ideal braking curve acquired based on the ideal braking force in this step exhibits a smaller deviation from an actual braking curve, and a stop position of the train is closer to a target stop position compared with the conventional solution.

Parameters in equation (1) are acquired as follows.

The air resistance is calculated according to equation (2):

$$F_A = W_1 \times V^2 \times 10^{-3} \quad (2)$$

where $V$ represents an operating speed of the train, and $W_1$ represents an air resistance coefficient when the train operates.

Taking a case that the eddy current braking levels include level 1 to level 7 as an example, the eddy current braking levels are substituted into equation (3) for calculating the eddy current braking forces sequentially, to obtain the eddy current braking forces of the train under various braking levels.

The eddy current braking force is calculated according to equation (3):

$$F_E = \frac{k_1(8.8 \times i)^2 \sqrt{V}}{(1 + 15k_2 + k_3\sqrt{V})^2} \quad (3)$$

where, i represents one of the eddy current braking levels, $k_1$ represents a first constant coefficient, $k_2$ represents a second constant coefficient, and $k_3$ represents a third constant coefficient. The constant coefficients may be determined based on a consist number of the train (which refers to the number of carriages included in a train set) and design parameters of an eddy current braking electromagnet. V represents the operating speed of the train.

The skid friction force is calculated according to equation (4):

$$F_W = \mu_1 \times Mg \quad (4)$$

where, $\mu_1$ represents a friction coefficient between a skid and the track, M represents a mass of the train, and g represents a gravitational acceleration.

The wear plate friction force is calculated according to equation (5):

$$F_F = \left\{ \frac{0, V \geq 150km/h}{m_2 \times 2n(454e^{-v} + 0.8e^{3v} + 138.6), V < 150km/h} \right\} \quad (5)$$

where, $\mu_2$ represents a friction coefficient between a wear plate and the track, $n$ represents the consist number of the train, and V represents the operating speed of the train.

The guide electromagnet resistance is calculated according to equation (6):

$$F_C = n \times 0.5[(\frac{V}{111})^{0.5} + 1.3(\frac{V}{111})^{0.7}] \quad (6)$$

where, V represents the operating speed of the train, and $n$ represents the consist number of the train.

The gravitational component force along the track slope in the current operating route is calculated according to equation (7):

$$F_S = Mg\sin\alpha \quad (7)$$

where, M represents the mass of the train, g represents the gravitational acceleration, and $\alpha$ represents an angle between the track slope in the current operating route and a horizontal plane.

Based on the above equations, it can be understood that each eddy current braking level corresponds to an eddy current braking force $F_E$, and thus each eddy current braking level corresponds to an ideal braking force. Each eddy current braking level is substituted into equation (3) to obtain an eddy current braking force $F_E$, and then the ideal braking forces under respective eddy current braking levels are obtained.

In step S102, ideal braking distances of the train under the eddy current braking levels are acquired based on the ideal braking forces of the train under the eddy current braking levels.

The ideal braking distances of the train under the eddy current braking levels are calculated according to equation (8):

$$S_i = \int_0^t Vdt$$
$$V = V_0 - \int_0^t \frac{F_i}{M}dt \quad (8)$$

where, M represents the mass of the train, $V_0$ represents an initial speed of the train at which braking starts, $t$ represents a braking time period of the train, which is a duration from a time instant at which braking starts to a time instant at which the operating speed reduces to 0, and $F_i$ represents the ideal braking force of the train under the eddy current braking level $i$. The ideal braking force under each eddy current braking level $i$ is substituted into equation (8), to obtain the ideal braking distance of the train under the eddy current braking level.

For the convenience of description, in the example where the eddy current braking levels include level 1 to level 7 according to the embodiment, $S_1$, $S_2$, ..., $S_7$ represent the ideal braking distances under respective eddy current braking levels.

In step S103, a target stop position of the train is determined based on the ideal braking distances under the eddy current braking levels and a braking start point.

Several stop positions (that is, the specified stop positions) are set in advance on a high-speed maglev line, and the train can only stop at these stop positions in some cases (such as emergency braking). It can be understood that if a distance between a position where the train starts to brake (that is, the braking start point) and a first stop position arranged first ahead of the train is less than $S_7$, it means that the train is unable to stop at the first stop position.

Thus, in this step, if it is determined that the distance between the braking start point and the first stop position ahead is less than $S_7$, a second stop position arranged second ahead of the train is determined as the target stop position in an emergency stop scenario. It can be understood that determining the second stop position ahead as the target stop position is a manner used in an emergency braking scenario for the train to stop as quickly as possible, and it is not limited to determining the second stop position ahead as the target stop position. If it is determined that the distance between the braking start point and the first stop position ahead is greater than $S_7$, the first stop position ahead is determined as the target stop position. Similarly, it is not limited to determining the first stop position as the target stop position.

It can be understood that stop positions ahead of the train are sequentially specified as the first stop position, the second stop position, etc., according to an order of increasing distance from the train.

In step S104, ideal braking levels and a timing for switching are acquired.

The distance between the braking start point and the target stop position is referred to as a target braking distance, which is denoted as $S_0$.

The eddy current braking levels are traversed in ascending order, such as from level 1 to level 7, sequentially. When an ideal braking distance $S_k$ under an eddy current braking level k is less than $S_0$, eddy current braking levels k and k-1 are determined as the ideal braking levels.

The timing for switching from the ideal braking level k to the ideal braking level k-1 is: a time instant when a distance between a current position of the train (that is, a position at a time instant during the braking process under the ideal braking level k) and the target stop position is equal to $S'_{k-1}$ (referred to as a reference braking distance). Taking a current speed (an operating speed at the current position) of the train as the initial speed of the train for braking, and substituting an ideal braking force under the ideal braking level k-1 into $F_i$, $S'_{k-1}$ is calculated based on equation (8).

In step S105, a correspondence between a distance and a speed of the train during an ideal braking process is acquired.

The ideal braking process refers to a process of braking with the ideal braking forces (that is, without considering the random disturbance force) using the ideal braking levels k and k-1 until the train stops.

The distance traveled by the train in the ideal braking process is calculated according to equation (9):

$$S = \int_0^t V dt \quad (9)$$

where, S represents the distance traveled by the train, and $t$ represents a time period elapsed during the ideal braking process.

$V$ in equation (9) is calculated according to equation (10):

$$V = V_0 - \int_0^{t_1} \frac{F_k}{M} dt - \int_{t_1}^t \frac{F_{k-1}}{M} dt \quad (10)$$

where, $t_1$ represents the timing for switching, t represents the time period elapsed during the ideal braking process, $F_k$ represents the ideal braking force under the ideal braking level k, $F_{k-1}$ represents the ideal braking force under the ideal braking level k-1, and $V_0$ represents the initial speed at which braking begins.

It can be understood that the ideal braking distance and the speed calculated in this step form an ideal braking curve (a speed-distance curve). The ideal braking curve illustrates the relationship between the speed of the train and the distance traveled (position) during the ideal braking process. As described above, the gravitational component force due to the gradient is determined as an influencing factor of the ideal braking force (curve), and thus under the same conditions, the ideal braking curve acquired based on the ideal braking force in this step has a small deviation from the actual braking curve.

In step S106, an actual braking force of the train is acquired.

The actual braking force of the train is calculated according to equation (11):

$$F' = F + F_R \quad (11)$$

where, $F$ represents the actual braking force of the train, and $F_R$ represents the random disturbance force.

$$F_R = \mu_3 F_E \quad (12)$$

where, $\mu_3$ represents a set of random numbers generated within a certain range, with an optional range of [-0.4, 0.4], and $F_E$ represents the eddy current braking force and its specific calculation method may be referred to equation (3).

In step S107, a distance traveled by the train during an actual braking process is acquired.

The distance traveled by the train during the actual braking process is calculated according to equation (13):

$$S' = \int_0^t V' dt$$
$$V' = V_0 - \int_0^t \frac{F'}{M} dt \quad (13)$$

where, t represents a time period elapsed during the actual braking process, and $S'$ represents the distance traveled by the train during the actual braking process.

In step S108, a difference between operating positions of the train during braking and a variation of the difference are calculated.

The difference between operating positions of the train is calculated according to equation (14):

$$e = S - S' \quad (14)$$

The variation of the difference is calculated according to equation (15):

$$ec = \frac{de}{dt} \quad (15)$$

In step S109, the difference and the variation of the difference are controlled by using a fuzzy control method, to obtain a control output quantity u .

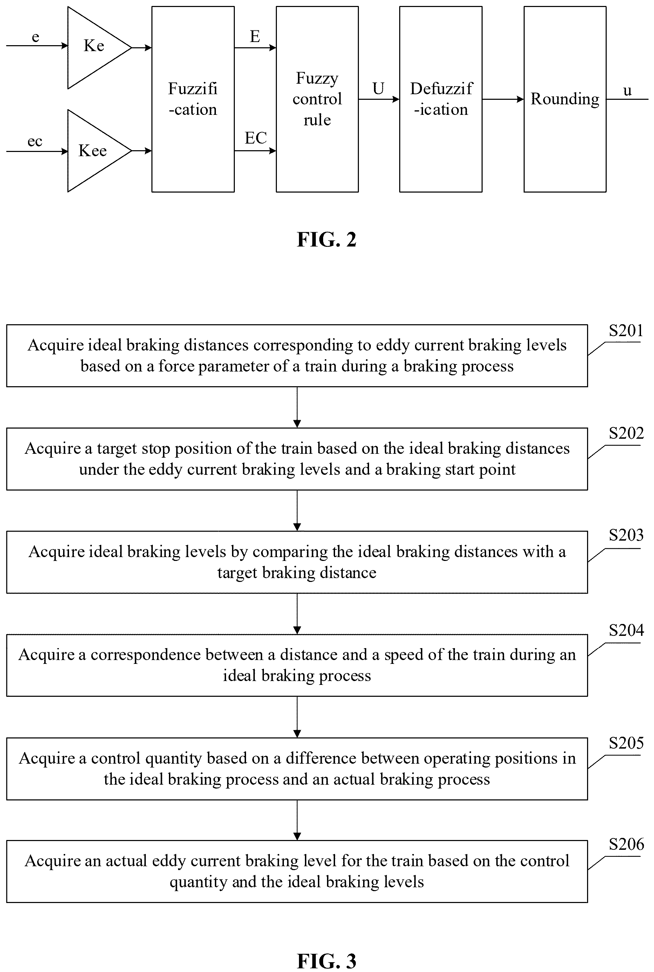

FIG. 2 is a block diagram of the fuzzy control method. As shown in FIG. 2, quantization factors for fuzzifying e and ec are set as $ke$ and $kec$, respectively. Their values may be independently set according to actual conditions, for example, $ke$ is set as 1/2 and $kec$ is set as 1/4. E and EC are fuzzy sets of linguistic variables reflecting the difference and the variation of the difference, respectively. Fuzzy linguistic variables of input quantities, that is, e and $ec$, are set as negative big (NB), negative small (NS ), zero (ZO), positive small (PS), and positive big (PB), with a universe of discourse of {-6, -5, -4, -3, -2, -1, 0, 1, 2, 3, 4, 5, 6}. That is, values of the fuzzy linguistic variables of all the input quantities fall within this range. U represents a fuzzy linguistic variable outputted by a control rule, similarly set as NB, NS, ZO, PS, and PB, with the universe of discourse of {-6, -5, -4, -3, -2, -1, 0, 1, 2, 3, 4, 5, 6}. That is, values of the fuzzy linguistic variables of all control outputs fall within this range. u represents an eddy current braking level obtained by defuzzifying U into a precise value and rounding the precise value. The fuzzy control rule is a well-established technology in this field, and is not repeated herein.

In step S110, a sum of the ideal braking levels and u is determined as an actual eddy current braking level of the train.

Before the timing for switching described above, a sum of the ideal braking level k and u is the actual eddy current braking level. After the timing for switching, a sum of the ideal braking level k-1 and $u$ is the actual eddy current braking level.

It can be understood that the actual eddy current braking level has an upper limit of level 7 and a lower limit of level 0.

In the process shown in FIG. 1, the gravitational component force along the track slope caused by the gradient in the operating route of the maglev train is determined as one of the bases to acquire the ideal braking force. Thus, the ideal braking distance of the maglev train is affected and constrained by the gravitational component force due to the gradient, leading to a small deviation relative to the actual braking distance, and thereby acquiring an accurate actual eddy current braking level. In addition, the ideal braking distance is acquired based on the ideal braking levels and the timing for switching, further reducing the deviation between the ideal braking distance and the actual braking distance. In summary, with the actual eddy current braking level obtained through fuzzy control based on the difference between operating positions, the possibility of the train stopping at the specified position can be improved. Particularly, although a long slope or a steep slope exists on a line during a braking process, the train can stop at the specified stop position reliably and safely, improving the reliability of an eddy current braking system of the train.

Compared with the conventional method for determining an eddy current braking level, the process shown in FIG. 1 may be summarized as the process shown in FIG. 3, which includes steps S201 to S206.

In step S201, ideal braking distances corresponding to eddy current braking levels are acquired based on a force parameter of a train during a braking process.

The force parameter includes: a gravitational component force caused by a gradient of a track in an operating route of the train. As described above, the gravitational component force caused by the gradient is determined as an influencing factor of an ideal braking force. In this case, an ideal braking distance acquired based on the ideal braking force is close to an actual braking distance, and thus the acquired eddy current braking level enables the train to stop at a specified position accurately.

In some embodiments, the force parameter further includes at least one item in equation (1) other than the gravitational component force caused by the gradient of the track, which is not described herein. In addition, the calculation methods for various forces and seven eddy current braking levels according to the embodiment shown in FIG. 1 are presented merely as examples and not limitations.

In step S202, a target stop position of the train is acquired based on the ideal braking distances under the eddy current braking levels and a braking start point.

An implementation of step S202 may be referred to steps S102 and S103.

It can be understood that equation (8) for calculating the ideal braking distance under each eddy current braking level in step S102 is merely an example and not a limitation. The ideal braking distance under each eddy current braking level may be obtained by using other equations for calculating distances. The method for comparing the respective distances one by one in step S103 is merely an example. In addition, the method for determining the first specified stop position or the second specified stop position ahead in the route determined by comparison as the target stop position is merely an example and not a limitation.

In step S203, ideal braking levels are acquired by comparing the ideal braking distances with a target braking distance.

The target braking distance is a distance between the braking start point and the target stop position.

An implementation of step S203 may be referred to the method for determining the ideal braking levels by traversing and comparing in step S104. It can be understood that other methods can be employed in addition to the method described in step S104, for example, a method for traversing in descending order of eddy current braking levels, and the like.

In step S204, a correspondence between a distance and a speed of the train during an ideal braking process is acquired.

An implementation of step S203 may be referred to the method for calculating in a braking process at the ideal braking levels k and k-1 respectively in step S105, and equations (9) and (10) in step S105 are merely examples. The method for acquiring a timing for switching may be referred to step S104.

In step S205, a control quantity is acquired based on a difference between operating positions in the ideal braking process and an actual braking process.

It can be understood that the operating positions during the ideal braking process are acquired based on the correspondence between the distance and the speed during the ideal braking process. The method for acquiring the operating positions in the actual braking process may be referred to equation (13).

An implementation of step S205 may be referred to steps S106 to S109, where the method for acquiring the actual braking force, the distance traveled during the actual braking process, the difference (that is, error) and the variation of the difference (such as a variation rate), and the fuzzy control method are only examples.

In step S206, an actual eddy current braking level for the train is acquired based on the control quantity and the ideal braking levels.

An implementation of step S206 may be referred to step S110.

According to the method described in this embodiment, the influence of a gradient in a route on a braking process is considered when calculating the ideal braking distance of the train, and the ideal eddy current braking levels and the timing for switching are determined. During the braking process, even if a long slope or a steep slope exists in the route, the train can stop at the specified stop position reliably and safely, which improves the reliability of the eddy current braking system of the train.

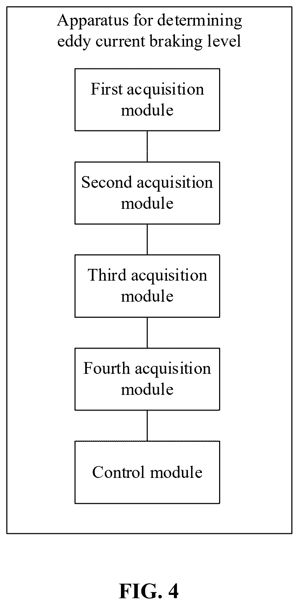

According to an embodiment of the present disclosure, an apparatus for determining an eddy current braking level is provided. As shown in FIG. 4, the apparatus includes: a first acquisition module, a second acquisition module, a third acquisition module, a fourth acquisition module, and a control module.

The first acquisition module is configured to acquire ideal braking distances corresponding to eddy current braking levels based on a force parameter of a train during a braking process, where the force parameter includes: a gravitational component force caused by a gradient of a track in an operating route of the train.

The second acquisition module is configured to acquire a target stop position of the train based on the ideal braking distances under the eddy current braking levels and a braking start point.

The third acquisition module is configured to acquire ideal braking levels by comparing the ideal braking distances with a target braking distance, where the target braking distance is a distance between the braking start point and the target stop position.

The fourth acquisition module is configured to acquire a correspondence between a distance and a speed of the train during an ideal braking process, where the ideal braking process is a process of braking using the ideal braking levels.

The control module is configured to acquire a control quantity based on a difference between operating positions in the ideal braking process and an actual braking process, and acquire an actual eddy current braking level for the train based on the control quantity and the ideal braking levels.

The eddy current braking level acquired by the apparatus in this embodiment enables the train to accurately stop at the specified stop position in emergency braking.

In a case where the function described in the method of the embodiments of the present disclosure is implemented in a form of software functional unit and sold or used as an independent product, the function may be stored in a readable storage medium of a computing device. Based on such understanding, a part of the embodiments of the present disclosure that contributes to the conventional technology or a part of the technical solution may be embodied in a form of a software product stored in a storage medium. Several instructions are included, to cause a computing device (which may be a personal computer, a server, a mobile computing device, a network device, or the like) to perform all or part of the steps of the method described in the embodiments of the present disclosure. The storage medium includes: a U disk, a removable hard disk, a read-only memory (ROM), a random-access memory (RAM), a magnetic disk, an optical disk, or other media that can store program codes.

The above embodiments in this specification are described in a progressive manner. Each of the embodiments focuses on describing its differences from other embodiments, and reference may be made among these embodiments with respect to the same or similar parts.

## Claims

1. A method for determining an eddy current braking level, comprising:

   acquiring ideal braking distances corresponding to eddy current braking levels based on a force parameter of a train during a braking process, wherein the force parameter comprises: a gravitational component force caused by a gradient of a track in an operating route of the train;
   acquiring a target stop position of the train based on the ideal braking distances under the eddy current braking levels and a braking start point;
   acquiring ideal braking levels by comparing the ideal braking distances with a target braking distance, wherein the target braking distance is a distance between the braking start point and the target stop position;
   acquiring a correspondence between a distance and a speed of the train during an ideal braking process, wherein the ideal braking process is a process of braking using the ideal braking levels;
   acquiring a control quantity based on a difference between operating positions in the ideal braking process and an actual braking process; and
   acquiring an actual eddy current braking level for the train based on the control quantity and the ideal braking levels.

2. The method according to claim 1, wherein the acquiring a target stop position of the train based on the ideal braking distances under the eddy current braking levels and a braking start point comprises:

   determining, in response to a distance between the braking start point and a first preset stop position arranged first ahead of the train being less than a distance threshold, a second preset stop position arranged second ahead of the train as the target stop position, wherein the distance threshold is an ideal braking distance corresponding to an eddy current braking level with a maximum braking force; and
   determining, in response to the distance between the braking start point and the first preset stop position being greater than the distance threshold, the first preset stop position as the target stop position.

3. The method according to claim 1, wherein the acquiring ideal braking levels by comparing the ideal braking distances with a target braking distance comprises:
traversing the eddy current braking levels in a preset order, and determining a first eddy current braking level k encountered first in the traversing that meets a condition and a previous eddy current braking level k-1 of the first eddy current braking level k meeting the condition as the ideal braking levels, wherein the preset order is an ascending order of eddy current braking forces, and the condition comprises an ideal braking distance corresponding to the first eddy current braking level k being less than the target braking distance.

4. The method according to claim 3, wherein the acquiring a correspondence between a distance and a speed of the train during an ideal braking process comprises:

acquiring a timing for switching from the ideal braking level k to the ideal braking level k-1; and
acquiring the correspondence between the distance and the speed during the ideal braking process based on the timing for switching, an initial speed at which braking starts, a time period elapsed during the ideal braking process, and ideal braking forces under the ideal braking levels.

5. The method according to claim 4, wherein the acquiring a timing for switching from the ideal braking level k to the ideal braking level k-1 comprises:

acquiring distances between positions during a braking process under the ideal braking level k and the target stop position;
searching among the distances for a distance which is equal to a reference braking distance, to obtain a target distance, wherein the reference braking distance is a braking distance obtained assuming that the train, under the ideal braking level k-1, uses a speed at the target distance as an initial speed; and
determining a time instant when the train travels to the target distance as the timing for switching.

6. The method according to claim 4, wherein the acquiring an actual eddy current braking level for the train based on the control quantity and the ideal braking levels comprises:
determining a sum of the ideal braking level k and the control quantity as the actual eddy current braking level before the timing for switching, and determining a sum of the ideal braking level k-1 and the control quantity as the actual eddy current braking level after the timing for switching.

7. The method according to claim 1, wherein the gravitational component force caused by the gradient of the track in the operating route of the train is acquired based on a mass of the train and the gradient, and the gradient is an angle between a slope in the operating route and a horizontal plane.

8. An apparatus for determining an eddy current braking level, comprising:

a first acquisition module, configured to acquire ideal braking distances corresponding to eddy current braking levels based on a force parameter of a train during a braking process, wherein the force parameter comprises: a gravitational component force caused by a gradient of a track in an operating route of the train;
a second acquisition module, configured to acquire a target stop position of the train based on the ideal braking distances under the eddy current braking levels and a braking start point;
a third acquisition module, configured to acquire ideal braking levels by comparing the ideal braking distances with a target braking distance, wherein the target braking distance is a distance between the braking start point and the target stop position;
a fourth acquisition module, configured to acquire a correspondence between a distance and a speed of the train during an ideal braking process, wherein the ideal braking process is a process of braking using the ideal braking levels; and
a control module, configured to acquire a control quantity based on a difference between operating positions in the ideal braking process and an actual braking process, and acquire an actual eddy current braking level for the train based on the control quantity and the ideal braking levels.

9. A controller, comprising:

a memory, configured to store a computer program; and
a processor, configured to perform the method for determining the eddy current braking level according to any one of claims 1 to 7 by executing the computer program.

10. A readable storage medium, wherein instructions in the readable storage medium, when executed by a processor of an electronic device, cause the electronic device to perform the method for determining the eddy current braking level according to any one of claims 1 to 7.

Acquire ideal braking forces exerted on a train during a braking process under eddy current braking levels — S101

Acquire ideal braking distances of the train under the eddy current braking levels based on the ideal braking forces of the train under the eddy current braking levels — S102

Determine a target stop position of the train based on the ideal braking distances under the eddy current braking levels and a braking start point — S103

Acquire ideal braking levels and a timing for switching — S104

Acquire a correspondence between a distance and a speed of the train during an ideal braking process — S105

Acquire an actual braking force of the train — S106

Acquire a distance traveled by the train during an actual braking process — S107

Calculate a difference between operating positions of the train during braking and a variation of the difference — S108

Control the difference and the variation of the difference by using a fuzzy control method to obtain a control output quantity — S109

Determine a sum of the ideal braking levels and the control output quantity as an actual eddy current braking level of the train — S110

**FIG. 1**

**FIG. 2**

S201 Acquire ideal braking distances corresponding to eddy current braking levels based on a force parameter of a train during a braking process

S202 Acquire a target stop position of the train based on the ideal braking distances under the eddy current braking levels and a braking start point

S203 Acquire ideal braking levels by comparing the ideal braking distances with a target braking distance

S204 Acquire a correspondence between a distance and a speed of the train during an ideal braking process

S205 Acquire a control quantity based on a difference between operating positions in the ideal braking process and an actual braking process

S206 Acquire an actual eddy current braking level for the train based on the control quantity and the ideal braking levels

**FIG. 3**

Apparatus for determining
eddy current braking level

First acquisition
module

Second acquisition
module

Third acquisition
module

Fourth acquisition
module

Control module

**FIG. 4**

## INTERNATIONAL SEARCH REPORT

| International application No. |
| --- |
| **PCT/CN2024/095489** |

| A. | CLASSIFICATION OF SUBJECT MATTER |
| --- | --- |

B60L7/28(2006.01)i;  B60T8/17(2006.01)i

According to International Patent Classification (IPC) or to both national classification and IPC

| B. | FIELDS SEARCHED |
| --- | --- |

Minimum documentation searched (classification system followed by classification symbols)

IPC:  B60L,  B60T

Documentation searched other than minimum documentation to the extent that such documents are included in the fields searched

Electronic data base consulted during the international search (name of data base and, where practicable, search terms used)

CNTXT, VEN, CNKI: 涡流, 制动, 重力, 坡度, 停车, 距离, 等级, eddy current, brak+, gravity, slope, stop, park, distance, level

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117719353 A (CRRC CHANGCHUN RAILWAY VEHICLES CO., LTD.) 19 March 2024 (2024-03-19)<br>claims 1-10, description, paragraphs 48-128, and figures 1-4 | 1-10 |
| A | CN 110562044 A (CRRC INDUSTRIAL INSTITUTE CO., LTD. et al.) 13 December 2019 (2019-12-13)<br>description, paragraphs 52-144, and figures 1-6 | 1-10 |
| A | CN 112208581 A (CRSC URBAN RAIL TRANSIT TECHNOLOGY CO., LTD.) 12 January 2021 (2021-01-12)<br>entire document | 1-10 |
| A | CN 112744270 A (SOUTHWEST JIAOTONG UNIVERSITY) 04 May 2021 (2021-05-04)<br>entire document | 1-10 |
| A | CN 114492190 A (TRAFFIC CONTROL TECHNOLOGY CO., LTD. et al.) 13 May 2022 (2022-05-13)<br>entire document | 1-10 |
| A | CN 115973111 A (EAST CHINA JIAOTONG UNIVERSITY) 18 April 2023 (2023-04-18)<br>entire document | 1-10 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 July 2024** | **29 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| :--- |
| **PCT/CN2024/095489** |

| C. | DOCUMENTS CONSIDERED TO BE RELEVANT | |
| :---: | :--- | :---: |
| Category* | Citation of document, with indication, where appropriate, of the relevant passages | Relevant to claim No. |
| A | CN 117021960 A (CRRC QINGDAO SIFANG ROLLING STOCK RESEARCH INSTITUTE CO., LTD.) 10 November 2023 (2023-11-10) <br> entire document | 1-10 |
| A | JP H0261799 A (FUJITSU TEN LTD. et al.) 01 March 1990 (1990-03-01) <br> entire document | 1-10 |
| A | JP H071995 A (MAZDA MOTOR CORP.) 06 January 1995 (1995-01-06) <br> entire document | 1-10 |

Form PCT/ISA/210 (second sheet) (July 2022)

**INTERNATIONAL SEARCH REPORT**
Information on patent family members

International application No.

**PCT/CN2024/095489**

| Patent document cited in search report | | | Publication date (day/month/year) | Patent family member(s) | Publication date (day/month/year) |
|---|---|---|---|---|---|
| CN | 117719353 | A | 19 March 2024 | None | |
| CN | 110562044 | A | 13 December 2019 | None | |
| CN | 112208581 | A | 12 January 2021 | None | |
| CN | 112744270 | A | 04 May 2021 | None | |
| CN | 114492190 | A | 13 May 2022 | None | |
| CN | 115973111 | A | 18 April 2023 | None | |
| CN | 117021960 | A | 10 November 2023 | None | |
| JP | H0261799 | A | 01 March 1990 | None | |
| JP | H071995 | A | 06 January 1995 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311737440